# EUROPÄISCHE PATENTSCHRIFT

(11) **EP 0 656 817 B1**
(45) Veröffentlichungstag und Bekanntmachung des Hinweises auf die Patenterteilung: **08.07.1998**
(21) Anmeldenummer: 93918913.0
(22) Anmeldetag: 23.08.1993
(51) Int. Cl.: B09B 3/00, B01D 11/02, C02F 1/26

(54) **VERFAHREN ZUM SANIEREN VON MIT ORGANISCHEN SCHADSTOFFEN KONTAMINIERTEN FESTSTOFFEN**
PROCESS FOR DECONTAMINATING SOLID MATERIALS CONTAMINATED WITH ORGANIC POLLUTANTS
PROCEDE DE DECONTAMINATION DE MATIERES SOLIDES CONTAMINEES PAR DES POLLUANTS ORGANIQUES

(30) Priorität: 22.08.1992 DE 4227962
(43) Veröffentlichungstag der Anmeldung: 14.06.1995
(73) Patentinhaber: FORSCHUNGSZENTRUM JÜLICH GMBH, 52425 Jülich (DE)
(72) Erfinder: HAEGEL, Franz-Hubert, D-52349 Düren (DE); CLEMENS, Wolfgang, D-50181 Bedburg (DE); SCHWUGER, Milan, D-42781 Haan (DE); SOEDER, Carl-Johannes, D-44287 Dortmund (DE); STICKDORN, Katrin, B-1150 Brüssel (BE); WEBB, Leslie, D-52353 Düren-Echtz (DE)
(86) Internationale Anmeldenummer: DE9300772
(87) Internationale Veröffentlichungsnummer: WO9404289

(56) Entgegenhaltungen:
- EP-A- 0 432 651
- WO-A-90/06795
- WO-A-91/11543
- DE-A- 3 815 309
- DE-A- 3 915 930
- CHEMICAL ABSTRACTS, vol. 99, no. 20, 14. November 1983, Columbus, Ohio, US; abstract no. 161055f, J. DESNOYERS 'Tar sand extractions with microemulsions. The dispersion of bitumen in microemulsions' Seite 146 ; & CAN. J. CHEM. ENG. Bd. 61, Nr. 5 , 1983 Seiten 680 - 688

## Beschreibung

Die Erfindung bezieht sich auf ein Verfahren zum Sanieren von mit organischen Schadstoffen kontaminierten Feststoffen, insbesondere PAK-kontaminiertem Boden.

Zu deponierende Materialien, wie Teerdeckenreste, Straßenkehricht, Schlick, Filterstäube und Schredderleichtmüll enthalten häufig organische Schadstoffe, wie polyzyklische aromatische Kohlenwasserstoffe (PAK), polychlorierte Biphenyle (PCB), Dibenzofurane (PCDF) und Dioxine (PCDD). Von ihnen gehen bei ihrer Deponierung Gefahren aus, die eine besondere Ausstattung der Deponien erforderlich machen. Es wird deshalb eine Vorbehandlung der schadstoffbelasteten Feststoffe und Abtrennung der Schadstoffe angestrebt. Ein besonderer Fall ist die Bodensanierung. Durch industrielle Prozesse, Unfälle und unachtsames Ablagern von Materialien, die Schadstoffe enthalten, ist es lokal zu nicht vertretbaren Bodenbelastungen gekommen, die jetzt eine Reinigung des Bodens erforderlich machen. Die heute üblichen Sanierungstechniken für belasteten Boden sind nicht in der Lage, alle Problemfälle zufriedenstellend zu lösen. So sind PAK-Kontaminationen vor allem auf Altstandorten von Mineralöllagern, bei Kokereien, teer- und pechverarbeitenden Betrieben sowie bei Altdeponien zu finden. Wegen ihrer geringen Wasserlöslichkeit, ihres geringen Dampfdruckes und ihrer Adsorptionsbereitschaft an anorganischem wie organischem Material bleiben die PAK-Verbindungen in den Bodenschichten, in denen sie deponiert sind, über lange Zeiten haften. PAK werden vor allem in den Feinsedimenten des Bodens angereichert.

Bei der Reinigung kontaminierten Bodens werden allgemein in-situ- oder ex-situ-Verfahren angewandt. Bei in-situ-Verfahren wird der Boden als solcher auf dem kontaminierten Gelände belassen, während alle ex-situ-Verfahren das Auskoffern des Bodens verlangen. Bei letzteren ist zusätzlich zwischen on-site- und off-site-Verfahren zu unterscheiden, d.h. zwischen Maßnahmen, die am Ort der Altlast durchgeführt werden können, oder solchen, die einen Transport zu einer Anlage nötig machen.

Aus Umweltgründen werden zur Dekontamination der belasteten Böden mikrobiologische Verfahren bevorzugt, wobei verbesserte Wachstumsbedingungen für die natürlichen Mikroorganismen durch Zufuhr von Stickstoff- oder Phosphatdünger und vor allem durch Zufuhr von Sauerstoff erreicht werden. Die mikrobiologischen Verfahren werden nicht zuletzt wegen ihrer hohen politischen Akzeptanz häufig eingesetzt. Sie scheitern aber in bestimmten Problemfällen. Böden mit sehr hohem Feinkornanteil adsorbieren viele Stoffe so stark, daß nur sehr geringe Mengen in der Bodenlösung vorhanden sind, und nur solche gelösten Stoffe sind den Mikroorganismen zugänglich. Zudem können einige Stoffe nur sehr schlecht oder gar nicht abgebaut werden, weil sie in wäßrigen Phasen nur schwer löslich oder wie im Falle chlorierter Kohlenwasserstoffe kaum bioverfügbar, d.h. von Organismen verwertbar, sind.

Mikrobiologische Verfahren werden wegen der verbesserten Wachstumsbedingungen häufig on-site durchgeführt. Hierzu wird der Boden bis zu einer bestimmten Tiefe ausgehoben und in Mieten gelagert.

Andere Verfahren, die on-site durchgeführt werden können, sind physikalisch-chemische Bodenwaschverfahren.

Sie beruhen im wesentlichen auf einer mechanischen Abtrennung des Schadstoffes durch Abrieb. Hierzu werden die Bodenpartikel unter Einsatz mechanischer Energie durch die Waschlosung bewegt. Als Waschlösung eignen sich beispielsweise Mikroemulsionen, die leichte Kohlenwasserstoffe, wie Benzen, Toluol oder Cyclohexan enthalten. So wird berichtet, daß mit Mikroemulsionen, die derartige Kohlenwasserstoffverbindungen enthalten, aus Teersanden Bitumen mit hoher Effizienz herausgelöst werden kann. (vgl. Desnoyers, J.E. et al.: Tar Sand Extraction with Microemulsions II. The Dispersion of Bitumen in Microemulsions, in: Can. J. Chem. Engin. 61, 1983, 680 - 688).

Der Einsatz von Waschverfahren in der Bodensanierung hat nämlich grundsätzlich den Nachteil, daß die Waschlösung je nach Bodenart nicht nur die aus dem Boden ausgewaschenen Schadstoffe, sondern auch fein- bis feinstkörnige Bodenfraktionen enthalten, an denen sich die Schadstoffe anreichern. Die aus den Prozeßwässern abgetrennten fein- und feinstkörnigen Bodenfraktionen müssen als Sondermüll weiterbehandelt bzw. als hoch belasteter Rest deponiert oder verbrannt werden. Für tonreiche Böden mit sehr hohem Feinkornanteil ist diese Verfahrensart also nicht mehr geeignet.

Die im Rahmen von Bodenwaschverfahren abgelösten Schadstoffe werden zudem nicht, vernichtet, sondern nur mit dem Prozeßwasser aus den kontaminierten Böden ausgewaschen. Eine Möglichkeit der Weiterbehandlung des Prozeßwassers ist in der Europäischen Patentanmeldung Nr. 0 432 651 beschrieben: Gemäß des dort offenbarten Verfahrens werden die biologisch abbaubaren Schadstoffe aus dem Prozeßwasser durch Extraktion entfernt bzw. in ein Extraktionsmittel überführt. Anschließend wird das Extraktionsmittel von dem Prozeßwasser abgetrennt, in einen Bioreaktor geleitet und dort die Schadstoffe mittels geeigneter Mikroorganismen abgebaut.

Bei der Bodenwäsche werden bisweilen Hilfsstoffe zugesetzt. Die Zugabe von pflanzlichen Ölen dient hierbei zur Verbesserung der Flotation leichter hydrophober organischer Bodenverunreinigungen, wie z.B. Kohlenstaub. Um bessere Waschleistungen zu erzielen, werden manchmal auch Tenside zugesetzt. Jedoch fällt bei allen Waschverfahren immer eine hoch belastete wäßrige Phase oder eine kontaminierte Feinkornfraktion an.

Eine Besonderheit unter den Waschverfahren stellt die Extraktion mit überkritischen Medien dar. Bei der Verwendung von überkritischem Wasser fallen jedoch beträchtliche Energiekosten an und es kommt zur teilweisen Zerstörung der Bodenmatrix. Günstiger sieht es hier bei der Verwendung von Kohlendioxid aus. Jedoch können damit bisher noch nicht in jedem Fall die erforderlichen Grenzwerte unterschritten werden.

Alle mikrobiologischen und physikalisch-chemischen Verfahren können auch off-site durchgeführt werden. Für thermische Verfahren zur Vernichtung der organischen Schadstoffe ist dies die Regel. Hierbei muß zwischen der Pyrolyse und der Verbrennung unterschieden werden. Böden aus einer Verbrennungsanlage sind nicht mehr ihrem ursprünglichen Zweck zuzuführen. Nach der Pyrolyse können Böden unter bestimmten Umständen wieder ausgebracht werden. Jedoch sind thermische Verfahren in der Regel teuer.

Aufgabe der Erfindung ist es, ein Verfahren zum Sanieren von mit organischen Schadstoffen kontaminierten Feststoffen, insbesondere von PAK-kontaminiertem Boden zu schaffen, mit dem eine einfache und vollständige Beseitigung der Verunreinigungen auch aus den fein- bis feinstkörnigen Fraktionen erreichbar ist.

Diese Aufgabe der Erfindung wird durch die in Patentanspruch 1 angegebenen Maßnahmen gelöst. Danach wird der belastete Feststoff gegebenenfalls nach Zerkleinerung und mechanischem Aufschluß mit einer Mikroemulsion vermengt. Mikroemulsionen sind thermodynamisch stabile, makroskopisch homogene und optisch transparente Mischungen aus Wasser, einem unpolaren hydrophoben Lösungsmittel (insbesondere Öl) und einem Tensid. Die Mikroemulsionen können als weitere Komponenten einen Elektrolyten und ein Cotensid, wie aliphatischer Alkohol, enthalten. In Mikroemulsionen sind sowohl polare als auch unpolare Schadstoffe solubilisierbar, die Mikroemulsionen weisen extrem niedrige Grenz- und Oberflächenspannungen auf. Aufgrund ihrer submikroskopischen Struktur liegen große innere Grenzflächen vor. Im Gegensatz zu Emulsionen sind Mikroemulsionen thermodynamisch stabil. Wird der kontaminierte Feststoff mit einer Mikroemulsion kontaktiert, so werden die organischen Verunreinigungen im unpolaren Kompartiment der Mikroemulsion solubilisiert und somit aus dem Feststoff herausgewaschen.

Im Falle des Bodens unterscheidet sich somit das erfindungsgemäße Verfahren in vorteilhafter Weise von den bisherigen Sanierungskonzepten, die auf einem Abriebvorgang beruhen, wesentlich durch den echten Lösungsvorgang. Während der Extraktion beim Vermengen des kontaminierten Bodens mit der Mikroemulsion treten die den Bodenpartikeln anhaftenden organischen Schadstoffmoleküle in die unpolare Phase der Mikroemulsion über. Es sind somit auch Böden mit einem hohen Schluff- und Tonanteil zu reinigen. Die Feinkornanteile müssen nicht wie bisher abgetrennt und deponiert werden.

Es findet eine Lösung der Verunreinigungen in der Mikroemulsion statt, die anschließend in einem weiteren Verfahrensschritt vom dekontaminierten Feststoff durch mechanische Trennverfahren abgesondert wird. Zur Entfernung der unpolaren Phase als Träger der organischen Stoffe wird die Mikroemulsion noch in die unpolare Phase und die tensidreiche Wasserphase gespalten, Patentanspruch 2. Diese Phasentrennung läßt sich in der Regel rein physikalisch durch Temperatur- oder Druckänderung erreichen. Dabei reichert sich das Tensid in der wasserreichen schadstofffreien Phase an, die Schadstoffe liegen aufkonzentriert in der unpolaren Phase vor.

In weiterer Ausgestaltung der Erfindung ist es vorgesehen, die tensidreiche Wasserphase zur Extraktion des belasteten Bodens wiederzuverwenden, Patentanspruch 3.

Sollten die gereinigten Feststoffe, insbesondere gereinigter Erdboden, wieder in die Umwelt ausgebracht werden, ist es erforderlich, Mikroemulsionen aus biologisch abbaubaren Komponenten zu verwenden, Patentanspruch 4. Für die unpolare Phase werden pflanzliche Öle eingesetzt. Als biologisch abbaubare Tenside kommen beispielsweise Alkylpolyglucoside, Alkylpolyglykolether oder Sorbitanester in Betracht, die keine langfristige Veränderung der Bodeneigenschaften und somit des Schadstofftransportes im Boden verursachen. Die erwünschte Erleichterung des Stofftransports wird somit in erster Linie nur wahrend der Feststoffwäsche wirksam. Eine unkontrollierte Kontamination des die gereinigten Feststoffe aufnehmenden Bodens durch Ausbreitung von Schadstoff wird somit vermieden.

Zur vollständigen Entsorgung der verunreinigten, insbesondere PAK-haltigen Phase der Mikroemulsion kann diese beispielsweise verbrannt werden. Gemäß der Erfindung ist es nach Patentanspruch 5 jedoch vorgesehen, die schadstoffbelastete Phase mit Mikroorganismen zu durchsetzen, die die organischen Verbindungen abbauen. Das dabei entstehende verunreinigungsentlastete Wasser wird abgezogen. Bevorzugt werden Mikroorganismen verwendet, die zur Impfung des gereinigten wieder auszubringenden Feststoffs, insbesondere Bodens geeignet und durch den vorbeschriebenen Prozeß zum Tensid-, Öl- und Schadstoffabbau adaptiert sind, Patentanspruch 6.

Der gereinigte Feststoff wird zur Abtrennung ggf. noch enthaltener Mikroemulsionsreste mit Wasser gespült und die nach Abtrennung erhaltene wasserreiche Spüllösung der mit Mikroorganismen durchsetzten, die PAK-Verbindungen enthaltenden unpolaren Phase der Mikroemulsion zugeführt, Patentanspruch 7. Werden bodenadaptierte Mikroorganismen verwendet, wird mit diesen der wiederauszubringende gereinigte Boden geimpft, Patentanspruch 8.

Das erfindungsgemäße Verfahren und eine zur Durchführung dieses Verfahrens geeignete Anlage werden nachfolgend anhand von Ausführungsbeispielen näher erläutert.

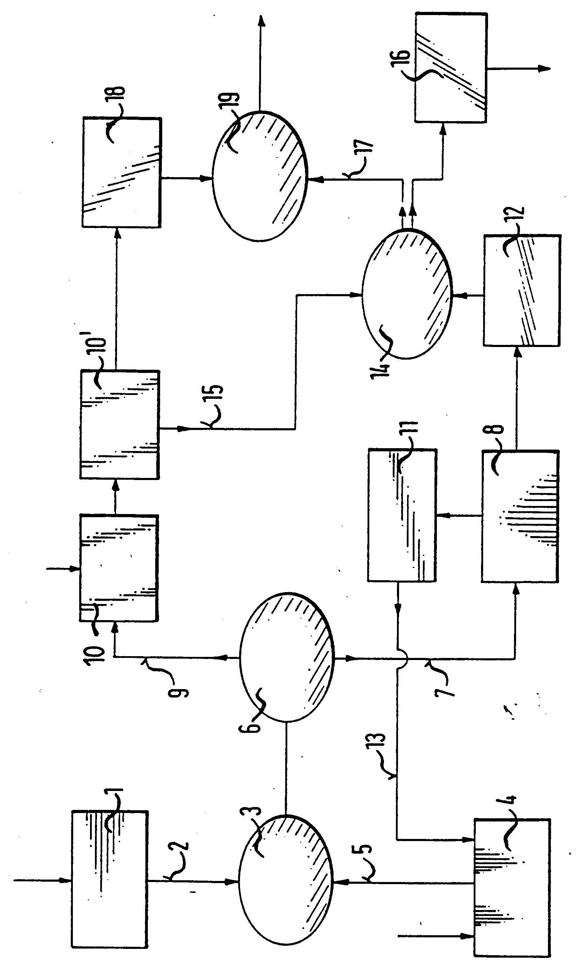

Die Zeichnung zeigt schematisch ein Fließschema einer Anlage zum Sanieren insbesondere PAK-kontaminierten Bodens. Die Anlage ist für eine bevorzugt on-site durchzuführende Bodenbearbeitung konzipiert.

Der PAK-kontaminierte Boden wird aus einem Feststofflager 1 über eine Zufuhr 2 in eine mehrstufige Extraktionseinrichtung 3 gebracht und hier mit einer Mikroemulsion vermengt, die aus Speicherbehältern 4 für die Mikroemulsion über eine Zuleitung 5 in die Extraktionseinrichtung eingeführt wird. In der Extraktionseinrichtung 3 findet eine intensive Vermengung von kontaminiertem Feststoff und Mikroemulsion statt. In den Ausführungsbeispielen werden für kontaminierten Boden Mikroemulsionen eingesetzt, die einerseits als unpolare Phase pflanzliche Öle, wie Rapsöl, Rapsöl-Methylester oder Palmöl, und als biologisch abbaubares Tensid z.B. Alkylpolyglycoside basierend auf C₁₂₋₁₆-Alkohol und auf C₁₀₋₁₆-Alkohol enthalten, oder sich andererseits aus mineralischen Ölen, wie enthalten, oder sich andererseits aus mineralischen Ölen, wie iso-Oktan und außerdem nichtionischen Tensiden zusammensetzen. Bei der Extraktion konzentrieren sich die PAK-Verbindungen in der unpolaren Ölphase, der mit der Mikroemulsion vermengte Boden wird PAK frei.

Aus der Extraktionseinrichtung 3 wird das Gemenge aus Feststoff bzw. Boden und Mikroemulsion in eine Trenneinrichtung 6 überführt, in der der extrahierte Feststoff von der jetzt PAK-belasteten Mikroemulsion getrennt wird. Die Trennung kann beispielsweise mechanisch durch Sedimentieren, Filtrieren oder Zentrifugieren erfolgen. Die PAK-haltige Mikroemulsion fließt dann über eine Mikroemulsionsleitung 7 zur Phasentrenneinrichtung 8, während der extrahierte Feststoff über ein Transportband 9 zur Spülkammer und anschließend zu einer weiteren Trenneinrichtung 10' gelangt.

Die Phasentrennung für die Mikroemulsion erfolgt im Ausführungsbeispiel thermisch. Durch Temperaturänderung wird die tensidreiche Wasserphase ausgetrieben und in einem Behälter 11 aufgefangen. Die PAK-haltige Ölphase fließt in einen Ölbehälter 12 ab. Im Ausführungsbeispiel ist es vorgesehen, die tensidreiche Wasserphase aus dem Behälter 11 über eine Rückführleitung 13 zum Speicherbehälter 4 der Mikroemulsion zurückzuleiten. Dem Speicherbehälter 4 ist somit im wesentlichen lediglich biologisch abbaubares Öl zuzuführen, der größte Anteil des Tensids wird bei der Feststoffsanierung im Kreislauf geführt.

Zum endgültigen Abbau der in der unpolaren Phase der Mikroemulsion gelösten PAK-Verbindungen findet im Ausführungsbeispiel eine biologische Zersetzung mittels Mikroorganismen statt. Hierzu wird die PAK-haltige Ölphase aus dem Ölbehälter 12 in einen Mikroorganismenreaktor 14 geleitet. Die Mikroorganismen sind an das Spektrum der abzubauenden Substanzen adaptiert und zur Impfung des Bodens geeignet. Im Ausführungsbeispiel wurden aus Boden isolierte Mischkulturen und eine Reinkultur des Flavo-Bacterium Indologenes eingesetzt.

In den Mikroorganismenreaktor 14 wird auch die aus der Spülkammer 10 mit nachgeschalteter Trenneinrichtung 10' über eine Spüllösungsleitung 15 abfliessende wasserreiche Spüllösung eingeleitet, um ggf. in der Spülkammer 10 noch ausgewaschene Mikroemulsion mit PAK-haltiger unpolarer Phase abbauen zu können. Im Mikroorganismenreaktor 14 werden die PAK-haltigen Verbindungen von den Mikroorganismen umgesetzt, in ein Abwasserbecken 16 fließt PAK-freies Abwasser ab.

Die Mikroorganismen lassen sich über eine Leitung 17 in den gereinigten Boden einführen. Der Boden wird aus einer Miete 18 entnommen, die zur Zwischenlagerung des in der Trenneinrichtung 10' gewonnenen Bodens dient. Das Impfen des Bodens mit Mikroorganismen findet in einer zum Impfen geeigneten Anlage 19 statt. Anschließend kann der sanierte Boden wieder in die Umgebung ausgebracht werden.

Bei der Behandlung von Feststoffen, die mit organischen Schadstoffen belastet sind, wird bei Extraktion mit einer Mikroemulsion, sei es, daß sie mineralische oder pflanzliche Öle enthält, eine deutliche Verringerung der Schadstoffbelastung erreicht. Dies führt im Falle von Feststoffen, die zu deponieren sind, zur Einstufung in niedrigere Schadstoffklassen. Bei Verwendung mineralischer Öle können diese dann schadstoffbelasteten Flüssigkeiten nach ihrer Abtrennung vom Feststoff und zweckmäßig auch nach Abtrennung der Tenside verbrannt werden. Bei Verwendung biologisch abbaubarer Tenside und Öle läßt sich die schadstoffhaltige Phase biologisch entsorgen. Letzteres ermöglicht es auch, die gereinigten Feststoffe, insbesondere gereinigten Boden, in die Umwelt wieder auszubringen, besondere Deponien sind nicht erforderlich.

Die Extraktion der Feststoffe mit Mikroemulsionen ist mehrstufig zu führen, der zu reinigende Feststoff wird in mehreren aufeinanderfolgenden Extraktionsschritten aufbereitet. Dabei wird jeweils zurückgeführte tensidreiche Phase nach Ergänzung frischer Tensid- und Ölanteile wieder in der gleichen Extraktionsstufe eingesetzt. Die Extraktion kann dabei so erfolgen, daß mehrere Extraktionsreaktoren, die auch zum Abtrennen von Mikroemulsionen nach jedem Extraktionsschritt geeignet sind, wechselweise mit kontaminiertem Feststoff befüllt werden und zur Durchführung der Extraktionsschritte nacheinander mehrmals mit aus den Speicherbehältern 4 entnommener Mikroemulsionen betrieben werden. Nach dem letzten Extraktionsschritt wird der Extraktionsreaktor dann jeweils geleert und der Feststoff von der schadstoffbelasteten Mikroemulsion in der Trenneinrichtung 6 befreit.

Bei den im folgenden beschriebenen Ausführungsbeispielen werden zur Extraktion von PAK-kontaminiertem Feststoff, der als Feinkornanteil mit Partikeln der Korngröße < 60 µm aus einer Bodenwaschanlage entnommen und mit 570 mg Pyren pro kg Feststoff belastet war, als Mikroemulsionen die nachfolgend genannten ternären Gemische verwendet:

| Mikroemulsion a: | |
|---|---|
| Wasser | 42 Gew % |
| iso-Oktan | 42 Gew % |
| Tensid (Igepal CA 520 = Octylphenolpentaethylenglycolether) | 16 Gew % |

| Mikroemulsion b: | |
|---|---|
| Wasser | 89 Gew % |
| Rapsöl | 1 Gew % |

| Alkylpolyglucoside (APG) | |
|---|---|
| C12-C16-APG | 6 Gew % |
| C10-C12-APG | 4 Gew % |

Der Feststoff wurde jeweils mit den Mikroemulsionen a oder b bei 25° C über 2 Stunden gemischt und extrahiert und anschließend in der schadstoffhaltigen Mikroemulsion durch Zentrifugieren bei 40.000 g über 2 Stunden wieder getrennt. Dabei wurden bei Extraktion mit Mikroemulsion a 277 mg Pyren pro kg Feststoff, entsprechend einer Schadstoffentlastung von 49 Gew %, und bei Extraktion mit Mikroemulsion b 412 mg Pyren pro kg Feststoff entsprechend einer Schadstoffentlastung von 72 Gew %, aus dem Feststoff entfernt. Wird die Extraktion zweistufig durchgeführt, erhält man nach dem zweiten Extraktionsschritt mit gleicher Mikroemulsion b noch einmal 88 mg Pyren pro kg Feststoff, was einer weiteren Schadstoffentlastung um 15 Gew % (bezogen auf die Gesamtbelastung von 570 mg kg⁻¹) entspricht.

Die Spaltung der Mikroemulsion in die tensidreiche und schadstoffhaltige Phase erfolgt während der Extraktion bereits spontan, wenn die maximal mögliche Ölmenge in der Mikroemulsion solubilisiert ist, weil durch Adsorption von Tensid am Feststoff der Mikroemulsion Tensid auch entzogen wird. Die Zusammensetzung der ölgesättigten Mikroemulsion a liegt bei 44 Gew % Wasser, 44 Gew % iso-Oktan, 12 Gew % Tensid, die der ölgesättigten Mikroemulsion b bei 88,8 Gew % Wasser, 1,2 Gew % Rapsöl, 6 Gew % C12-C16-APG. Um eine Spaltung zu vermeiden, muß in der Mikroemulsion Tensid im Überschuß gehalten werden. Im Ausführungsbeispiel wurden 25 Gew % des Tensids am Feinkorn adsorbiert, was durch Zugabe von Tensid zur Mikroemulsion - 4 Gew % Tensid bezogen auf das Gesamtgewicht der Mikroemulsion a - ausgeglichen wurde.

Die schadstoffbelastete Mikroemulsion a wurde nach Abtrennung vom gereinigten Feststoff durch Temperatursenkung auf 10° C in eine tensidreiche und schadstoffhaltige Phase überführt. Der Volumenanteil der schadstoffhaltigen Phase betrug bei dieser Temperatur ca 74 Vol %. Die Konzentration von Pyren in dieser Phase betrug ca das 1,2-fache der ursprünglichen Konzentration in der Mikroemulsion bei 25° C. Die Ölphase läßt sich nach Aufrahmen der Emulsion durch Dekantiern abtrennen. Die Phasentrennung kann durch Zentrifugieren unterstützt werden. Es wurden so 43 Gew % der Feststoffkontamination extrahiert und abgetrennt. Der im Ausführungsbeispiel sehr hohe Volumenanteil der organischen Phase in der Mikroemulsion a beruht auf der guten Öllöslichkeit des verwendeten Tensids.

Die Konzentration des Pyrens in der tensidreichen Phase der Mikroemulsion a war nach der Phasentrennung auf etwa 50 % der Konzentration des Pyrens in der Mikroemulsion vor Phasentrennung gesunken. Die tensidreiche Phase ist deshalb nach Zugabe von iso-Oktan und Tensid wieder zur Extraktionseinrichtung rückführbar. Wird statt des Tensids Igepal CA 520 ein besser wasserlösliches Tensid, wie AIkylpolyglucosid (APG), eingesetzt, ist es zweckmäßig, die dadurch zu erwartende schlechtere Trennleistung durch den Einsatz pflanzlicher statt mineralischer Öle zu kompensieren, da in pflanzlichen Ölen PAK wesentlich besser löslich sind.

Im Ausführungsbeispiel eingesetzte Mikroorganismen wurden aus der Flora eines PAK-kontaminierten Bodens gewonnen. Es wird das Flavo-Bacterium Indologenes in zwei verschiedenen Populationen eingesetzt, nämlich Mikroorganismen aus altbelastetem Boden und solche aus einem künstlich mit Fluoranthen und Benz[a]pyren kontaminierten Boden. Mit beiden Populationen konnte der Abbau von Fluoranthen erreicht werden, wobei durch Tenside und Öle eine Verlangsamung der biologischen Umsetzung eintritt.

Im Mikroorganismenreaktor wird die Reaktion durch Zufuhr eines Mineralmediums, im Ausführungsbeispiel
- (NH₄)₂HPO₄: 0,5 g/l
- KH₂PO₄: 0,25 g/l
- MgSO₄·H₂0: 0,05 g/l
- Biomassekonzentration: 8 bis 10 g/l
- Spurenelemente: 5 ml/l
aufrechterhalten. In einem Reaktorsystem von 2,5 l Gesamtinhalt wurden 3,5 ml/d Rapsöl und 2,2 ml/d 10 %ige Tensidlösung bei einer Zufuhr von 1640 ml/d Mineralmedium vollständig abgebaut.

Die von den Schadstoffen gereinigten Feststoffe werden nach Abtrennung der Mikroemulsion zur Entfernung noch anhaftender Öl- und Tensidreste mit Waschwasser gespült, das im Ausführungsbeispiel in den Mikroorganismenreaktor abfließt.

Vor Ausbringen des gereinigten Feststoffes ist noch eine Impfung mit bodenadaptierten Mikroorganismen vorgesehen. Ein derartiges Impfen ist vorteilhaft, da nach der Extraktion keine natürliche Bodenflora existiert, die in der Lage ist, noch geringe vorhandene Restanteile Tensids und Öls abzubauen.

Als Extraktionseinrichtung sind Rührreaktoren, Extraktionssäulen oder im einfachsten Falle Mieten über einem Auffangbecken geeignet. Die schadstoffbelasteten Feststoffe sind. entsprechend der vorgesehenen Extraktionseinrichtung gegebenenfalls vor ihrer Zugabe und Vermischung mit Mikroemulsion zu zerkleinern und aufzuschließen, damit die Mikroemulsion in der Extraktionseinrichtung die Schadstoffe kontaktieren kann.

Für die Trennung von Feststoff und Mikroemulsion sind je nach Korngröße der extrahierten Feststofffraktion Filter, Vakuumbandpressen, Kammerfilterpressen oder beispielsweise auch Zentrifugen einsetzbar.

Zur Reaktion der Mikroorganismen mit der schadstoffbelasteten Phase im Mikroorganismenreaktor eignen sich Flachbett-, Wirbelschicht-, Drehtrommelreaktoren. Die nachfolgende Impfung erfolgt zweckmäßig durch Mischen gereinigten Feststoffs mit Biomasse und Nährlösung oder durch Aufsprühen von biomassehaltiger Nährlösung. Feinkornfraktionen sollten nicht in Mieten, sondern bevorzugt in Reaktoren saniert werden.

Als Phasentrenneinrichtung lassen sich Apparaturen verwenden, die die Schwerkraftrennung nutzen, wie Dekanter, Settler oder Querstromabscheider. Die Trennung ist zusätzlich unterstützbar durch Zentrifugen, insbesondere Separatoren.

## Patentansprüche

1. Verfahren zum Sanieren von mit organischen Schadstoffen kontaminierten Feststoffen,
**dadurch gekennzeichnet**,
daß bei Feststoffen, enthaltend oder bestehend aus Feinkorn der Korngrößen bis zu 0,063 mm, die organischen Schadstoffe aus dem Feinkorn mittels einer Mikroemulsion extrahiert werden und die dabei gebildete schadstoffhaltige Mikroemulsion vom gereinigten Feststoff getrennt wird.

2. Verfahren nach Anspruch 1,
**dadurch gekennzeichnet**,
daß die Mikroemulsion in eine tensidreiche und eine schadstoffhaltige Phase überführt wird.

3. Verfahren nach Anspruch 2,
**dadurch gekennzeichnet**,
daß die tensidreiche Phase der Mikroemulsion zur Extraktion des kontaminierten Feststoffs wiederverwendet wird.

4. Verfahren nach einem der vorhergehenden Ansprüche,
**dadurch gekennzeichnet**,
daß die Mikroemulsion aus biologisch abbaubaren Komponenten besteht.

5. Verfahren nach Anspruch 4,
**dadurch gekennzeichnet**,
daß die schadstoffhaltige Phase zum Abbau der organischen Verbindungen mit Mikroorganismen durchsetzt wird, und daß dabei entstehendes schadstoffreies Wasser abgezogen wird.

6. Verfahren nach Anspruch 5,
**dadurch gekennzeichnet**,
daß Mikroorganismen verwendet werden, die zur Impfung des gereinigten Feststoffes geeignet und adaptiert sind.

7. Verfahren nach einem der vorhergehenden Ansprüche,
**dadurch gekennzeichnet**,
daß der gereinigte Feststoff - nach Abtrennen der schadstoffhaltigen Mikroemulsion - mit Wasser gespült und bei Verwendung biologisch abbaubarer Komponenten die Spüllösung der mit Mikroorganismen durchsetzten schadstoffhaltigen Phase zugeführt wird.

8. Verfahren nach Anspruch 7,
**dadurch gekennzeichnet**,
daß der gereinigte Feststoff nach seiner Spülung mit Wasser abgetrennt und mit den zum biologischen Abbau der schadstoffhaltigen Phase benutzten adaptierten Mikroorganismen geimpft wird.

## Claims

1. Process for decontaminating solid materials contaminated with organic pollutants,
characterised in that in the case of solid materials containing or consisting of fine grain having grain sizes up to 0.063 mm, the organic pollutants are extracted from the fine grain by means of a micro-emulsion and the micro-emulsion thereby formed, containing the pollutants, is separated from the purified solid material.

2. Process according to claim 1,
characterised in that the micro-emulsion is converted into a surfactant-rich and a pollutant-containing phase.

3. Process according to claim 2,
characterised in that the surfactant-rich phase of the micro-emulsion is recycled for extracting the contaminated solid material.

4. Process according to any of the preceding claims,
characterised in that the micro-emulsion consists of biologically degradable components.

5. Process according to claim 4,
characterised in that the pollutant-containing phase is infiltrated with micro-organisms to break down the organic compounds and that pollutant-free water produced thereby is drawn off.

6. Process according to claim 5,
characterised in that micro-organisms are used that are suitable and adapted for inoculating the purified solid material.

7. Process according to any of the preceding claims,
characterised in that the purified solid material - after removal of the micro-emulsion containing the pollutants - is rinsed with water, and if biologically degradable components are being used the rinsing solution is passed to the pollutant-containing phase infiltrated with micro-organisms.

8. Process according to claim 7,
characterised in that after it has been rinsed with water, the purified solid material is removed and inoculated with the adapted micro-organisms utilised for the biological degradation of the pollutant-containing phase.

## Revendications

1. Procédé de décontamination de matières solides contaminées par des substances polluantes organiques
caractérisé en ce que, pour des matières solides contenant ou constituées de grains fins d'une granularité allant jusqu'à 0,063 mm, on extrait les substances polluantes organiques du grain fin au moyen d'une micro-émulsion, et on sépare la micro-émulsion contenant des substances polluantes ainsi formée de la matière solide épurée.

2. Procédé selon la revendication 1,
caractérisé en ce qu'on transforme la micro-émulsion en une phase riche en agent tensio-actif et en une phase contenant la substance polluante.

3. Procédé selon la revendication 2,
caractérisé en ce qu'on réutilise la phase riche en agent tensio-actif de la micro-émulsion pour l'extraction de la matière solide contaminée.

4. Procédé selon l'une des revendications précédentes
caractérisé en ce que la micro-émulsion se compose de constituants biodégradables.

5. Procédé selon la revendication 4,
caractérisé en ce que la phase contenant des substances polluantes est traversée pour la dégradation des composés organiques par des micro-organismes et en ce que l'eau exempte de substance polluante ainsi formée est éliminée.

6. Procédé selon la revendication 5,
caractérisé en ce qu'on utilise des micro-organismes qui conviennent et sont adaptés à l'inoculation de la matière solide purifiée.

7. Procédé selon l'une des revendications précédentes,
caractérisé en ce qu'on rince à l'eau la matière solide épurée, après séparation de la micro-émulsion contenant des substances polluantes et, dans le cas de l'utilisation de constituants biodégradables, en ce qu'on envoie la solution de rinçage à la phase contenant des substances polluantes traversée par des micro-organismes.

8. Procédé selon la revendication 7,
caractérisé en ce qu'on sépare la matière solide épurée après son rinçage à l'eau, et en ce qu'on lui inocule des microorganismes adaptés utilisés pour la biodégradation de la phase contenant des substances polluantes.
